# EUROPEAN PATENT APPLICATION

(11) **EP 4 086 013 A1**
(43) Date of publication of application: **09.11.2022**
(21) Application number: 21172300.2
(22) Date of filing: 05.05.2021
(51) Int. Cl.: B08B 1/00

(54) **AN APPARATUS AND METHOD FOR CLEANING AN ELONGATE CARRIER MEMBER**

(71) Applicant: WELAND AB, 333 28 Smalandsstenar (SE)
(72) Inventor: ERIKSSON, Ulf, 333 75 Reftele (SE)
(74) Representative: Bergenstråhle & Partners AB

(57) **Abstract**

Apparatus (1) and method for removing waste products (60) from a carrier member (50) with an extension in a first direction (X). The apparatus comprises a guide member (10) arranged to be moved along the carrier member (50) and a cleaning device (20) arranged to remove waste products (60) from the carrier member (50) by being movably arranged relative the guide member (10) in a depth direction (Z) perpendicular to a support plane (A) of the guide member (10), and in a direction which is parallel to the support plane (A). By that the cleaning device (20), when the apparatus (1) is in use, comprises a first movement component (z) in the depth direction (Z), and a second movement component (x) parallel to the first direction (X) wherein the cleaning device (20) is caused to engage with the waste products (60) in both the depth direction (z) and the direction (x) parallel to the first direction (X).

## Description

### Technical field

Present invention relates to an apparatus as well as a method for cleaning an elongate carrier member which is arranged for supporting a workpiece which is processed in such manner that impurities or waste products from the processing, such as slag, adhere to the carrier member.

### Background art

When laser cutting is performed on sheet material like steel sheet, the sheet is normally positioned on a support structure which may comprise a number of parallel carrier members, which by that support the sheet material. The carrier members may be designed as elongate, upright standing rails arranged with a few centimeters' mutual spacing wherein the carrier members support the steel sheet in a common plane. When cutting a steel sheet by using a laser, a molten metal, slag or other waste products departs from the underside of the cut metal sheet downward and adheres to the carrier members. After a while, the carrier members are very polluted, wherein the support plane formed by the individual carrier members (rails) is not a flat plane any longer, since the support surfaces (tops) of the rails are more or less polluted. This may also affect the precision during the laser cutting operation. The problem described above may also occur at other types of processes like cutting with gas, certain types of grinding operations, etc.

It is a standard procedure within the field to restore the carrier members by regularly cleaning of the same such as adhering waste products are removed. Earlier, this was carried out manually by using hoes, picks, scrapers, and similar tools, which was very time-consuming wherein the process had to stop during several hours, which was costly. To cope with this, the inventor developed an apparatus and a method described in EP 1 572 410 B1 which discloses an apparatus and a method where the apparatus is moved along the longitudinal direction of the carrier member (rail) and the apparatus comprises a guide plate and a cleaning device. The cleaning device is provided with teeth for cleaning off adhering waste products from the carrier member and is movable in relation to the guide plate, such as the cleaning device has a movement component which is directed from the carrier member towards the guide plate.

The apparatus and method described in EP 1 572 410 B1 has been used with good results regarding removal of slag or other waste products from carrier member in a rather time-efficient manner. To speed up the cleaning process it is desirable to clean more than one carrier member at the same time. One problem with prior art is that the slag removing apparatus with an up/down-motion must be rather heavy, to not bounce during the cleaning. Since the apparatus normally is manually handled when applied to and moved along the carrier member during the slag-removal, the apparatus must not be too heavy. When trying to use known apparatus to clean more than one elongate carrier member at the same time, the apparatus must be heavier to not bounce, compared to when cleaning only one carrier member.

### Summary of the invention

An object of the present invention is providing an apparatus with a low weight, which by that is easier to handle manually and which by that and its new inventive design is less bouncy, why it further may be used to clean more than one carrier member at the same time. A further object is to provide a method where the cleaning of a carrier member is performed in a way which is less bouncy compared to prior art.

This object is achieved by an apparatus for cleaning an elongate carrier member according to claim 1. An elongate carrier member is normally a piece of rail which is arranged for supporting a workpiece which is processed and where the process is performed in such manner that impurities or waste products from the processing, such as slag, adhere to the carrier member. The carrier member has an extension in a first direction and the apparatus comprises a guide member, which is arranged to be moved along the carrier member in the first direction, and which comprises a first side which faces the carrier member when the apparatus is in use, and a second side opposite the first side. The guide member has an extension in the first direction and in a second direction transverse to the first direction, thus forming a support plane which when the apparatus is in use is supported by the carrier member. The extension (and the plane) in the first direction and in the second direction must not be interpreted as being long, it may be rather short but still some kind of plane is formed. The apparatus further comprises a cleaning device with an extension in the second direction and which is arranged to remove impurities or waste products from the carrier member, by that the cleaning device comprises an engagement section arranged to engage with waste products adhering on the carrier member. The cleaning device is movably arranged relative the guide member in a depth direction, that is perpendicular to the support plane of the guide member, wherein at least parts of the engagement section of the cleaning device is arranged to pass the support plane of the guide member, wherein the cleaning device when the apparatus is in use, comprises a motion relative the guide member which comprises a first movement component in the depth direction. The cleaning device is further movably arranged relative the guide member in a longitudinal direction which is parallel to the first direction, wherein the motion of the cleaning device relative the guide member, when the apparatus is in use, comprises a second movement component which is parallel to the first direction.

By the design of the cleaning device, such as it comprises movement components in two directions, perpendicular (i.e. up/down) relative the guide member and along the guide member (i.e. forwards/backwards), the cleaning device may engage with the slag products deposited on the carrier member in an oblique angle relative the guide member, preferably from below (upwards in the normal use on a planar plane) and with an angle relative the guide member in a forward or backward direction (the cleaning direction of the apparatus when in use). Such a solution draws the apparatus downwards, wherein the weight of the apparatus may be decreased, which is positive regarding the manual handling of the same and which provides a possibility to clean more than one carrier member. The latter since the apparatus may be wider than prior art apparatus without being heavier due to the inventive design of the cleaning device. This is not possible with known solutions.

According to an embodiment, the cleaning device comprises at least two least engagement sections which are arranged spaced apart in the second direction. By such cleaning device, the speed of the cleaning of a plurality of carrier members with the apparatus will increase and the total stop time for cleaning of elongate carrier members will decrease. By that, a less time-consuming cleaning is at hand which results in a cost-effective laser cutting process.

According to an embodiment, the apparatus further comprises a reciprocating means which is arranged to cause the motion of the cleaning device relative the guide member when the apparatus is in use, such as the motion of the cleaning device comprises the first and second movement components. The reciprocating means may be a piston driven by for example compressed air, hydraulic pressure or the like. Of course, other solutions for causing the motion of the cleaning device such as a rotating motion by a rotating means may be used.

According to an embodiment, a first normal of the cleaning device, at a level of the support plane of the guide member, has an angle less than 90° relative a second normal of the guide member, wherein the motion of the cleaning device relative the guide member, when the apparatus is in use, always comprises the first and second movement components at the level of the support plane. Another way of describing this is that the cleaning device, at an imaginary tangent point at the level of the support plane (the guide member), that is where the cleaning device "passes" the guide member during its cleaning motion, always has a normal which comprises a direction such as the first and second movement components always occur. For example, this first normal of the cleaning device may preferably be directed in a more or less forward or backward direction, depending on the cleaning direction of the apparatus.

According to an embodiment, the apparatus further comprises a chassis which is fixedly attached to the guide member and arranged to support at least the reciprocating means.

According to an embodiment, the cleaning device is wedge-shaped with a front side arranged to engage with waste products adhering on the carrier member. A wedge-shaped cleaning device, which with the front side faces the impurities of the carrier member, which is to be cleaned, has by its form an angle of at least the front side relative the guide member. This means that at least a top or more of the wedge passes (below) the guide member and reaches in and below the slag adhered on the carrier member, wherein when the cleaning device moves relative the guide member, the slag is lifted at the same time as the apparatus is drawn towards the carrier member du to that there is a motion component also along the carrier member in the front direction. The motion of the wedge-shaped cleaning device may be a reciprocating motion or an oscillating motion.

According to an alternative and more preferred embodiment compared to the wedge-shaped cleaning device described above, the cleaning device instead is arc-shaped with a concave front side and a back side, wherein at least the front side of the cleaning device is arranged to engage with waste products adhering on the carrier member. The arc-shape allows at least the front end of the cleaning device to enter below the slag deposited at the carrier member and when the apparatus is moved (normally by hand) in the first direction which is the cleaning direction, the cleaning device engages with the slag from below and draws the apparatus towards the carrier member(s) when moving upwards from a lowermost position to an uppermost position. The arc-shape provides that the cleaning device during its motion always has a normal which comprises a direction such as the first and second movement components always occur, at an imaginary tangent point at the level of the support plane (the guide member), when the cleaning device "passes" the guide member during its cleaning motion. This means that when the cleaning member during its motion (caused by the reciprocating means) passes the guide member in direction from the carrier member towards the guide member (i.e. upwards) shifts from a more x-directed direction (that is a direction along the carrier member) to a more z-directed direction (that is a direction upwards and away from the carrier member).

According to an embodiment, the arc-shaped cleaning device is pivotally attached to the chassis and thereby pivotable relative the chassis around a first pivot axis, and the reciprocating means is pivotally attached with one end to the cleaning device and thereby pivotable relative the cleaning device around a second pivot axis, wherein the second pivot axis is arranged at first distance from the first pivot axis. By that, the motion of the cleaning device may be an oscillating motion, wherein the arc-shaped cleaning device swings in an arcuate motion between a lower and upper position. During this motion, slag is removed in a smooth and less bouncy operation compared to prior art solutions.

According to an embodiment, the reciprocating means is pivotally attached to the chassis and thereby pivotable relative the chassis around a third pivot axis. This is positive since the reciprocating motion of the reciprocating means (for example a piston) may follow the cleaning device during the arcuate motion, such as a simple and cost-efficient solution for causing an arcuate motion is achieved by the reciprocating means.

According to an embodiment, the engagement section of the cleaning device is arranged as a slot with an open end arranged for receiving a carrier member and with side sections arrangeable on respective sides of a carrier member. The side sections are arranged to engage with the slag adhered to the sides of carrier member and an end distant from the open end is arranged to engage with the slag adhered to the top of carrier member. When moving (pushing or pulling) the apparatus in the first direction, the engagement section of the cleaning device oscillates and engages with the slag which is removed from the carrier member bit by bit along the first direction. A width between the side sections of each slot may approximately be 1.2 - 1.7 times the thickness of one guide member.

According to an embodiment, the arc-shaped cleaning device comprises flanges arranged on the back side of the cleaning device, wherein each flange comprises a first hole arranged to engage with a first shaft, which is removably arranged at the chassis in a position corresponding to the first pivot axis. Further each flange comprises a second hole arranged to engage with a second shaft, which is removably arranged at the cleaning device in a position corresponding to the second pivot axis. By this design, the cleaning device is removable and by that exchangeable which is positive since the cleaning device wear during use.

According to an embodiment, the arc-shaped cleaning device is symmetrical, wherein the cleaning device is reversible relative the chassis. This means that the cleaning device also comprises engagement section/sections also at an opposite end (normally an upper end) of the cleaning device, wherein when the lower engagement sections closest to the guide member are worn out, it is easy to flip the cleaning device such as the second setup of engagement sections may be used. For example, the flanges and holes described in the embodiment above, are arranged such as the cleaning device is reversible.

According to an aspect a method for removing impurities or waste products such as slag from a carrier member is disclosed. As mentioned earlier, the carrier member is arranged for supporting a workpiece which is processed and which carrier member during the processing, is given a layer or a more or less lumped or irregular coating of adhering waste products. According to the method, a cleaning device is moved along the carrier member in a first direction and is caused to engage with and act on waste products adhering thereon in a depth direction, which is substantially opposed to the direction in which the waste products were deposited on the carrier member, wherein the cleaning device further is caused to engage with and act on waste products adhering on the carrier member in a direction which at least partly parallel to the first direction, that is along the carrier member. This means that the cleaning device during the cleaning operation may move in such way that it comprises movement components in both the depth direction (the opposite direction to the direction in which the waste products were deposited on the carrier member) as well as in the first direction, which is along the carrier member and by that, normally perpendicular relative the depth direction. Normally, the carrier members extend in the first direction in a horizontal plane and the waste products fall down on the carrier member, and when the cleaning apparatus is used it is moved along the carrier member. The cleaning device then engages with and acts on the waste product when moving upwards and at the same time forwards, which means that the waste products are removed in a lifting motion upwards/forwards.

Such a method is very effective to remove waste products from the carrier members and since the apparatus more or less is drawn towards the carrier member, it will not bounce. Known solutions which operates only in one direction (up/down) will bounce very easy and must then be rather heavy to counteract that and the problem will increase if one tries to clean more than one carrier member at the same time. The inventive solution does not have these problems.

According to an embodiment, the method further comprises removing impurities or waste products such as slag from at least two carrier members simultaneously.

According to an embodiment, the method is performed by an apparatus according to any of the apparatus claims.

### Brief description of drawings

The invention will now be described, by way of example, with reference to the accompanying drawings in which:
Figs. 1a-b show perspective views of an apparatus according to an embodiment of the invention. The apparatus is arranged for cleaning an elongate carrier member which is arranged for supporting a workpiece which is processed in such manner that impurities or waste products from the processing, such as slag, adhere to the carrier member.
Fig. 2a shows a side view of the apparatus of Fig.1 wherein a cleaning device is in a first position, which is in an upper position, during a cleaning operation of the apparatus.
Fig. 2b shows a side view of the apparatus of Fig.1 wherein the cleaning device is in a second position, which is in lower position, during a cleaning operation of the apparatus.
Fig 2c is a zoomed side view of the cleaning device of Fig. 2a and Fig. 2d is a zoomed side view of the cleaning device of Fig. 2b.
Fig 3 is a schematic front view of the cleaning device of the apparatus of Fig. 1a-b when engages with waste products adhered on carrier members.
Fig. 4 is a perspective view of the apparatus of Figs. 1a-b arranged with a protective cover.

### Description of embodiments

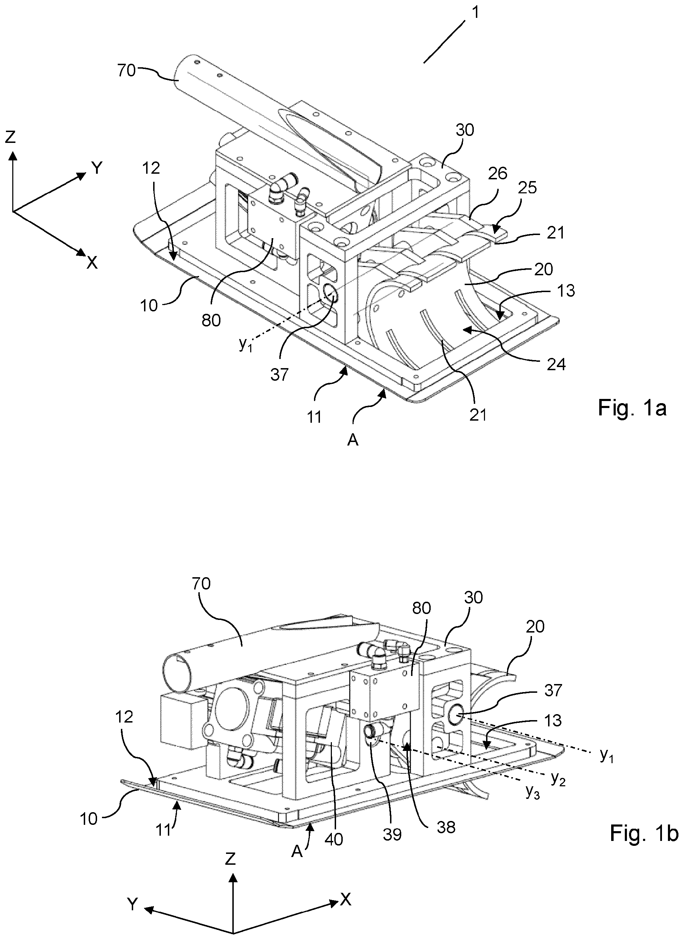

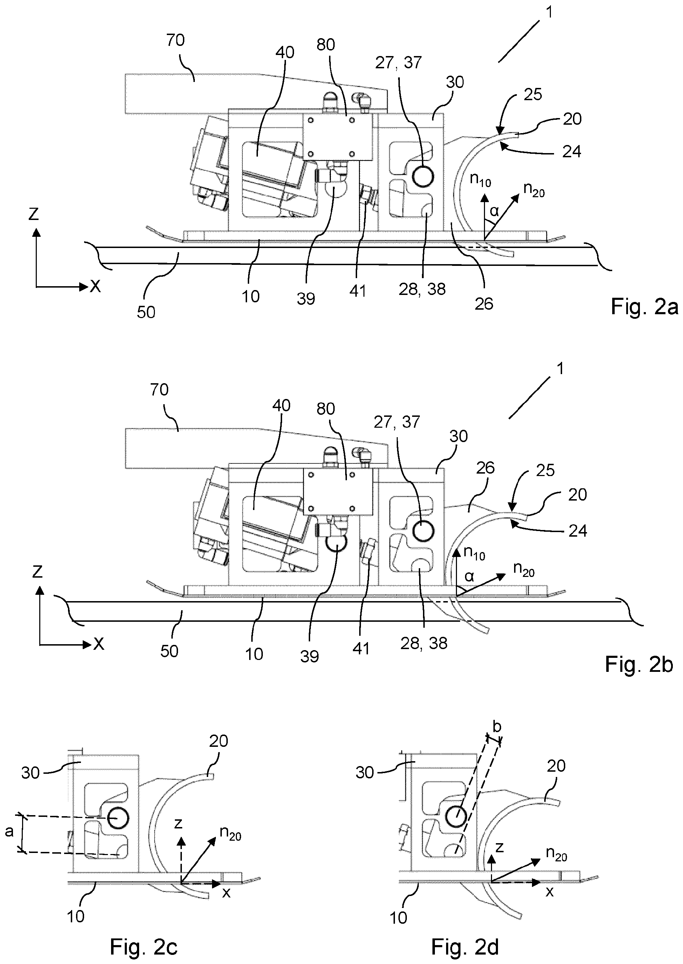

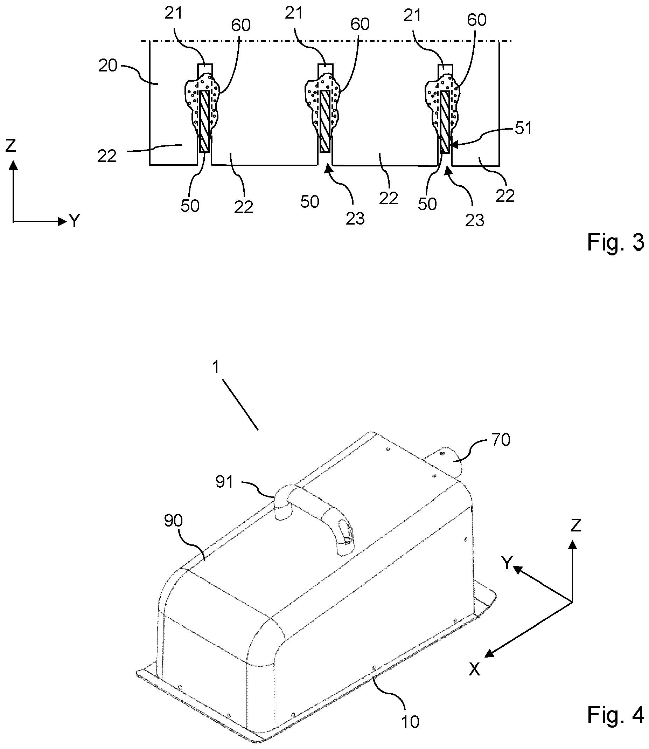

Figs. 1a-b shows an apparatus 1 according to the invention, which apparatus 1 is arranged for cleaning elongate carrier members (see Figs. 2a-b and Fig. 3) which carrier members are arranged for supporting a workpiece which is processed in such manner that impurities or waste products from the processing, such as slag, adhere to the carrier members. The apparatus 1 comprises a guide member 10 in the form of a plate, which has an extension in a first direction X and in a second direction Y, transverse to the first direction X, thus forming a support plane A which when the apparatus 1 is in use is supported by the carrier members. The guide member 10 comprises a first side 11 which, when the apparatus 1 is in use, faces the carrier members (see for example Fig. 2a), and a second side 12 which is opposite the first side 11. The apparatus further comprises an arc-shaped cleaning device 20 with a concave front side 24 and a convex back side 25, wherein the front side 25 is arranged to engage with waste products. The cleaning device 20 is arranged at the front end referring to the cleaning direction of the apparatus 1, which is the same as the first direction X, and the arc-shaped cleaning device 20 also has an extension in the second direction Y. The cleaning device 20 is arranged to remove impurities or waste products from the carrier member, by at least one, but more preferred three engagement sections 21 which are arranged to engage with waste products adhered to the carrier members (see description further below). The cleaning device 20 is movably arranged relative the guide member 10 and extends with a lower part in a depth direction Z, below the support plane A / the guide member 10, through a hole 13 which is arranged into the guide member 10. The depth direction Z is perpendicular to the support plane A of the guide member 10.

The apparatus 1 further comprises a chassis 30 which is fixedly attached to the second side 12 of the guide member 10. The chassis 30 is arranged to carry the cleaning device 20 and a driving arrangement. The driving arrangement is in the preferred embodiment a reciprocating means 40 in the form of a piston 40, driven by compressed air. The reciprocating means/piston 40 is arranged to cause the motion of the cleaning device 20 relative the guide member 10 when the apparatus 1 is in use, such as the motion of the cleaning device 20 comprises the first and second movement components z, x. The function will be explained in relation to Figs. 2a-d. Further, a shaft holder 70 is fixed on top of the chassis 40, which shaft holder 70 is arranged to receive a maneuvering shaft (not visible) which is used to push and pull the apparatus 1 back and forth in the first direction X, during the cleaning operation. The chassis 30 may also carry nipples and other necessary components 80 to supply the piston 40 with compressed air.

The arc-shaped cleaning device 20 is pivotally attached to the chassis 30 by a first shaft 37 and thereby pivotable relative the chassis 30 around a first pivot axis y₁. The first shaft 37 is pivotally attached to the cleaning device 20 by being arranged through a number of flanges 26, which are arranged on the back side 26 of the cleaning device 20. The reciprocating means 40 is in turn pivotally attached to the cleaning device 20 by a second shaft 38 and thereby pivotable relative the cleaning device 20 around a second pivot axis y₂. Also the second shaft 38 is pivotally attached to the cleaning device 20 through the flanges 26. Further, the reciprocating means/piston 40 is pivotally attached to the chassis 30 by a third shaft 39 and thereby pivotable relative the chassis 30 around a third pivot axis y₃.

Fig. 2a shows a side view of the apparatus 1 wherein the cleaning device 20 is in a first position, which is in an upper position referring the depth direction Z (or height direction if convenient), during a cleaning operation of the apparatus 1. The guide member 10 rests, in the using mode of the apparatus 1, on top of the elongate carrier members 50, which extends in the first direction X, which is similar with the "cleaning direction". As can be seen in the figure, the cleaning device 20 extends just below the top of the carrier member 50 at its upper position, but of course it may extend just above the same if necessary. Due to the arc-shape of the cleaning device 20, a first normal n₂₀ of the cleaning device 20 has an angle α less than 90° relative a second normal n₁₀ of the guide member 10. This angle α always is less than 90° relative the second normal n₁₀ of the guide member 10 during the motion of the cleaning device 20, wherein the motion of the cleaning device 20 relative the guide member 10, when the apparatus 1 is in use for cleaning, always comprises a first movement component z and a second movement component x at the level of the support plane A. This may be seen in Figs. 2c-d.

The first shaft 37, to which the cleaning device 20 is pivotably attached to the chassis 30, is removably arranged through a respective first hole 27 in respective flange 26 of the plurality of flanges 26 arranged on the back side 25 of the cleaning device 20. Lower down in the depth direction Z, that is below this first shaft 37 and closer to the guide member 10, the second shaft 38 is in the same way pivotally and removably arranged through a respective second hole 28 in respective flange 26 of the plurality of flanges 26. The end 41 of the reciprocating means 40 is as mentioned above attached to the second shaft 38 and the reciprocating means/piston 40 is pivotally attached to the chassis 30 by the third shaft 39 which is pivotally attached to the chassis 30 at a distance behind the cleaning device 20. The arc-shaped cleaning device 20 is symmetrical in that way that the first and second holes 27, 28 of the flanges 26 are arranged such as the cleaning device 20 is reversible relative the chassis 30. As may be seen in for example Fig. 1a there are engagement sections 21 also at the upper part of the cleaning device 20, wherein when the lower engagement sections 21 are worn out, one simply can turn the cleaning device 20 180° and continue to use the same cleaning device 20 until also these engagement sections 21 are worn out.

The function of the apparatus 1 when removing slag and other waste products from the carrier member(s) 50 is now explained and it is appropriate to study Figs. 2a-d together. The apparatus is during the slag-removing operation moved in the first direction X wherein the guide member 10 slides along the carrier members 50. At the same time, the cleaning device 20 moves by means of the reciprocating means 40, which itself has a linear motion along its extension. But by the pivot connections between the reciprocating means 40 to the chassis (via the third shaft 39) and to the cleaning device 20 (via the second shaft 38) as well as the pivot connections between the cleaning device 20 and the chassis 30 (via the first shaft 37), the motion of the arc-shaped cleaning device 20 is "swing-like" or "digging" motion. The first and second holes 27, 28 and thus the first and second shaft 37, 38 are arranged at a first distance a from each other in the depth direction Z and at a second distance b from each other in the first direction (when/if the cleaning device 20 would be aligned with the plane A. This enables that the linear motion of the reciprocating means/piston 40 is transferred to the "digging" motion, wherein the position where the cleaning device 20 "crosses" the plane A/the guide member 10 moves back and forth along the guide member 10, which may be seen when studying Fig. 2c and 2d. This means that the first normal n₂₀ of the cleaning device 20 always comprises a first movement component z in the depth direction Z and a second movement component x which is parallel to the first direction X. Thus, during the motion of the arc-shaped cleaning device 20, the first normal n₂₀ of the cleaning device 20 at this position shifts between a more "z-directed" normal (upper position) to a more "x-directed" normal (lower position) in a seamless manner. The slag adhered to the carrier member(s) 50 is by that lifted/scraped off from the carrier members 50 from below and forwards which also means that the apparatus 1 at the same time as the cleaning device 20 engages with the waste products (slag) is drawn towards the carrier members 50. This results in a less bouncy cleaning process, or even a total lack of bouncy behavior of the apparatus 1, which is far better than prior art slag-removing apparatus.

Fig. 3 is a schematic front view of the cleaning device 20 of the apparatus 1 when it engages with waste products 60 adhered on carrier members 50. Due to the inventive design described above, the apparatus 1 is during the cleaning motion of the cleaning device 20 drawn towards the carrier members 50 as described above. This enables that slag 60 from more than one carrier member 50 may be removed simultaneously, without the apparatus 1 being heavy to counteract any bouncy behavior, wherein the cleaning device according to the preferred embodiment comprises three engagement sections 21, which are arranged spaced apart in the second direction Y. The respective engagement section 21 is arranged as a slot 21 with an open end 23, arranged for receiving one carrier member 50 and with side sections 22 which are arrangeable on respective sides 51 of a carrier member 50. When the apparatus 1 is in use for cleaning the elongate carrier members 50, the waste product/slag 60 adhered on the carrier member 50 is shoveled off from the carrier member 50. The slag 60 which is shoveled from the carrier member 50 leaves by that in an upwards/forward direction due to the shape of the cleaning device 20 and the first and second movement components z, x which always act on the slag 60 when the cleaning device 20 moves relative the guide member 10 and the apparatus 1 is moved in the first direction.

Fig. 4 shows a perspective view of the apparatus 1 arranged with a protective cover 90 which is arranged on top of the guide member 10 and which covers the moving parts of the apparatus 1. The cover 90 further comprises a handle 91 and at the back, the shaft holder 70 is visible.

Although the description above shows various specific embodiments, they should not be construed as limiting the scope of the invention, but are essentially there to illustrate various possible ways of practicing the invention falling within its scope. References to an element in singular are not meant to mean "one and only one" unless it is specifically expressed, but rather "one or more". It is an intention that elements mentioned in the described embodiments cover all structural and functional equivalents to the elements known to those skilled in the art.

## Claims

1. An apparatus (1) for cleaning an elongate carrier member (50) which is arranged for supporting a workpiece which is processed in such manner that impurities or waste products (60) from the processing, such as slag, adhere to the carrier member (50), the carrier member (50) has an extension in a first direction (X), the apparatus (1) comprising:
a guide member (10) which is arranged to be moved along the carrier member (50) in the first direction (X) and which comprises a first side (11) which faces the carrier member (50) when the apparatus (1) is in use, and a second side (12) opposite the first side (11), wherein the guide member (10) has an extension in the first direction (X) and in a second direction (Y) transverse to the first direction (X), thus forming a support plane (A) which when the apparatus (1) is in use is supported by the carrier member (50),
a cleaning device (20) with an extension in the second direction (Y) and which is arranged to remove impurities or waste products (60) from the carrier member (50) by that the cleaning device (20) comprises an engagement section (21) arranged to engage with waste products (60) adhering on the carrier member (50), wherein the cleaning device (20) is movably arranged relative the guide member (10) in a depth direction (Z) that is perpendicular to the support plane (A) of the guide member (10), wherein at least parts of the engagement section (21) of the cleaning device (20) is arranged to pass the support plane (A) of the guide member (10), wherein the cleaning device (20) when the apparatus (1) is in use comprises a motion relative the guide member (10) which comprises a first movement component (z) in the depth direction (Z), **characterized in that** the cleaning device (20) further is movably arranged relative the guide member (10) in a longitudinal direction (X) which is parallel to the first direction (X), wherein the motion of the cleaning device (20) relative the guide member (10) when the apparatus (1) is in use comprises a second movement component (x) which is parallel to the first direction (X).

2. Apparatus (1) according to claim 1, wherein the cleaning device (20) comprises at least two least engagement sections (21) which are arranged spaced apart in the second direction (Y).

3. Apparatus (1) according any of claim 1 or 2, wherein the apparatus (1) further comprises a reciprocating means (40) which is arranged to cause the motion of the cleaning device (20) relative the guide member (10) when the apparatus (1) is in use, such as the motion of the cleaning device (20) comprises the first and second movement components (z, x).

4. Apparatus (1) according to any of the previous claims, wherein a first normal (n₂₀) of the cleaning device (20), at a level of the support plane (A) of the guide member (10), has an angle (α) less than 90° relative a second normal (n₁₀) of the guide member (10), wherein the motion of the cleaning device (20) relative the guide member (10), when the apparatus (1) is in use, always comprises the first and second movement components (z, x) at the level of the support plane (A).

5. Apparatus (1) according to any of the previous claims, wherein the apparatus (1) further comprises a chassis (30) which is fixedly attached to the guide member (10) and arranged to support at least the reciprocating means (40).

6. Apparatus (1) according to any of the previous claims, wherein the cleaning device (20) is wedge-shaped with a front side arranged to engage with waste products (60) adhering on the carrier member (50).

7. Apparatus (1) according to any of claims 1 - 5, wherein the cleaning device (20) is arc-shaped with a concave front side (24) and a back side (25), wherein at least the front side (24) of the cleaning device (20) is arranged to engage with waste products (60) adhering on the carrier member (50).

8. Apparatus (1) according to claim 7, wherein the arc-shaped cleaning device (20) is pivotally attached to the chassis (30) and thereby pivotable relative the chassis (30) around a first pivot axis (yi), and the reciprocating means (40) is pivotally attached with one end (41) to the cleaning device (20) and thereby pivotable relative the cleaning device (20) around a second pivot axis (y₂), wherein the second pivot axis (y₂) is arranged at first distance (a) from the first pivot axis (y₁).

9. Apparatus (1) according to any of claims 5 - 8, wherein the reciprocating means (40) is pivotally attached to the chassis (30) and thereby pivotable relative the chassis (30) around a third pivot axis (y₃).

10. Apparatus (1) according to any of the previous claims, wherein the engagement section (21) of the cleaning device (20) is arranged as a slot (21) with an open end (23) arranged for receiving a carrier member (50) and with side sections (22) arrangeable on respective sides (51) of a carrier member (50).

11. Apparatus (1) according to any of claims 7 - 10, wherein the arc-shaped cleaning device (20) comprises flanges (26) arranged on the back side (25) of the cleaning device (20), wherein each flange (26) comprises a first hole (27) arranged to engage with a first shaft (37) which is removably arranged at the chassis (30) in a position corresponding to the first pivot axis (yi), wherein each flange (26) further comprises and a second hole (28) arranged to engage with a second shaft (38) which is removably arranged at the cleaning device (20) in a position corresponding to the second pivot axis (y₂).

12. Apparatus (1) according to any of claims 7 - 11, wherein the arc-shaped cleaning device (20) is symmetrical, wherein the cleaning device (20) is reversible relative the chassis (30).

13. A method for removing impurities or waste products (60) such as slag from a carrier member (50) which is arranged for supporting a workpiece being processed and which carrier member (50), during the processing, is given a layer or a more or less lumped or irregular coating of adhering waste products (60), wherein a cleaning device (20) is moved along the carrier member (50) in a first direction (X) and is caused to engage with and act on waste products (60) adhering thereon in a depth direction (z) which is substantially opposed to the direction in which the waste products (60) were deposited on the carrier member (50), **characterized in that** the cleaning device (20) further is caused to engage with and act on waste products (60) adhering on the carrier member (50) in a direction (x) which is at least partly parallel to the first direction (X), that is along the carrier member (50).

14. Method according to claim 13, wherein the method further comprises removing impurities or waste products (60) such as slag from at least two carrier members (50) simultaneously.

15. Method according to claim 13 or 14, wherein the method is performed by an apparatus (1) according to any of claims 1 -12.
